# EUROPEAN PATENT APPLICATION

(11) **EP 4 481 914 A1**
(43) Date of publication of application: **25.12.2024**
(21) Application number: 24166376.4
(22) Date of filing: 26.03.2024
(51) Int. Cl.: H01M 50/204, H01M 50/209, H01M 50/244, H01M 50/251, H01M 50/258, H01M 50/289, H01M 50/291, H01M 50/503, H01M 50/507, H01M 50/249

(54) **RACK ASSEMBLY AND BATTERY PACK INCLUDING THE SAME**

(30) Priority: 23.06.2023 KR 20230080812
(71) Applicant: SK On Co., Ltd., Seoul 03161 (KR)
(72) Inventor: GOO, Bon A, 34124 Daejeon (KR); DO, Won Seok, 34124 Daejeon (KR); PARK, Byung Jun, 34124 Daejeon (KR); PARK, Chan Ho, 34124 Daejeon (KR)
(74) Representative: Prüfer & Partner mbB Patentanwälte · Rechtsanwälte

(57) **Abstract**

A rack assembly (300) is disclosed. The rack assembly (300) comprises a rack frame (310) including a rack scaffold (311) and a rack deck (312) coupled to the rack scaffold (311), and a tray (320) coupled to the rack deck (312). The rack deck (312) is elongated in a front-rear direction. The tray (320) includes a tray body (321) facing the rack deck (312) and positioned above the rack deck (312), and a tray wall (322) extending upward from an edge of the tray body (321). The edge of the tray body (321) extends rearward from a front end of the tray body (321) and leads to a rear end of the tray body (321).

## Description

### TECHNICAL FIELD

The technology and implementations disclosed in this patent document generally relate to a rack assembly and a battery pack including the same. In particular, the disclosed technology relates to a rack assembly, in which battery cells are easily replaced, and a battery pack including the same.

### BACKGROUND

In an existing battery pack or energy storage system (ESS), a plurality of battery cells was stacked, coupled to a bus bar, and loaded on a battery rack. Due to this structure, the process of installing or replacing the plurality of battery cells in the battery rack in the existing battery pack or energy storage system may be very complicated, and the cost may be relatively high.

(Patent Document 1) US 11502363 B2

### SUMMARY

The disclosed technology can be implemented in some embodiments to address the above-described and other problems.

The disclosed technology can also be implemented in some embodiments to provide a rack assembly, that is easy to load a plurality of battery cells, and a battery pack including the same.

The disclosed technology can also be implemented in some embodiments to provide a rack assembly, that is easy to replace a plurality of battery cells, and a battery pack including the same.

To solve the above-described and other technical problems, in one aspect of the present disclosure, a rack assembly may comprise a rack frame including a rack scaffold and a rack deck, the rack deck coupled to the rack scaffold; and a tray coupled to the rack deck, wherein the rack deck is elongated in a front-rear direction, wherein the tray includes a tray body facing the rack deck, the tray body positioned above the rack deck; and a tray wall extending upward from an edge of the tray body, wherein the edge of the tray body extends rearward from a front end of the tray body and leads to a rear end of the tray body.

In another aspect of the present disclosure, a battery pack may comprise a rack assembly including a rack frame and a tray coupled to the rack frame; a plurality of battery cells loaded on the tray and stacked in a front-rear direction; and a bus bar assembly coupled to the plurality of battery cells, wherein the rack frame includes a rack scaffold and a rack deck coupled to the rack scaffold, wherein the rack deck is elongated in the front-rear direction, wherein the tray includes a tray body facing the rack deck, the tray body positioned above the rack deck; a tray coupler extending from the tray body, the tray coupler coupled to the rack deck; and a tray wall extending upward from an edge of the tray body, wherein the edge of the tray body extends rearward from a front end of the tray body and leads to a rear end of the tray body.

According to at least one aspect of the present disclosure, a rack assembly, that is easy to load a plurality of battery cells, and a battery pack including the same can be provided.

According to at least one aspect of the present disclosure, a rack assembly, that is easy to replace a plurality of battery cells, and a battery pack including the same can be provided.

### BRIEF DESCRIPTION OF THE DRAWINGS

The accompanying drawings illustrate examples of embodiments of various technical features disclosed in the disclosure.
FIG. 1 illustrates a rack frame of a rack assembly based on an embodiment of the disclosed technology.
FIG. 2 illustrates a tray based on an embodiment of the disclosed technology.
FIG. 3 illustrates a tray illustrated in FIG. 2 when viewed from another angle.
FIG. 4 illustrates a rack assembly including a tray and a rack frame.
FIG. 5 illustrates a battery cell based on an embodiment of the disclosed technology.
FIG. 6 illustrates a battery pack based on an embodiment of the disclosed technology.
FIG. 7 partially illustrates a battery cell and a tray illustrated in FIG. 6.
FIG. 8 illustrates a battery cell and a tray illustrated in FIG. 7 when viewed from another angle.
FIG. 9 illustrates an area 'A' illustrated in FIG. 8.
FIG. 10 illustrates a portion of a cross section of a battery pack illustrated in FIG. 6.
FIG. 11 illustrates in detail a rack deck illustrated in FIG. 10.
FIG. 12 illustrates that a bus bar assembly is coupled to battery cells loaded on a rack assembly.
FIG. 13 is a perspective view of a bus bar assembly based on an embodiment of the disclosed technology.
FIG. 14 is a perspective view of a bus bar based on an embodiment of the disclosed technology.
FIG. 15 is a plan view of a bus bar illustrated in FIG. 14.
FIG. 16 is a plan view of a support frame based on an embodiment of the disclosed technology.
FIG. 17 illustrates a portion 'B' of FIG. 13.
FIG. 18 is a cross-sectional view of a bus bar assembly taken along C1-C2 of FIG. 17.
FIG. 19 is a perspective view illustrating an overall appearance of a battery pack based on an embodiment of the disclosed technology.
FIG. 20 illustrates an energy storage house based an embodiment of the disclosed technology.
FIG. 21 illustrates an energy storage system based an embodiment of the disclosed technology.

### DETAILED DESCRIPTION

Reference will now be made in detail to embodiments of the disclosed technology, examples of which are illustrated in the accompanying drawings. However, the following description is merely an example and does not intended to limit the disclosed technology to a specific implementation.

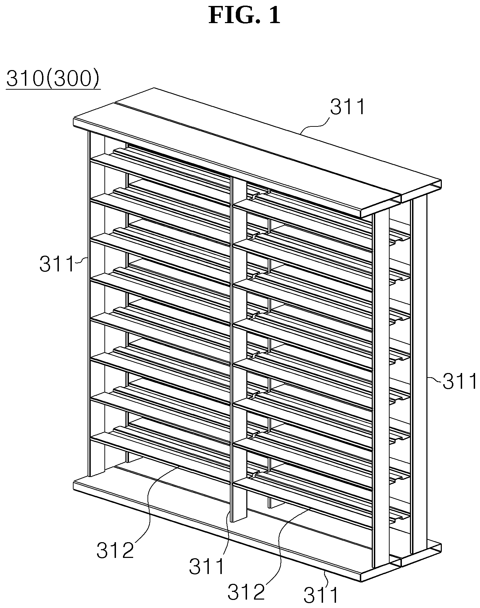

FIG. 1 illustrates a rack frame of a rack assembly based on an embodiment of the disclosed technology.

Referring to FIG. 1, a rack assembly 300 may include a rack frame 310. The rack frame 310 may include a rack scaffold 311. The rack scaffold 311 may form a skeleton of the rack frame 310.

For example, the rack scaffold 311 may form a bottom of the rack frame 310. For example, the rack scaffold 311 may form a top of the rack frame 310. For example, the rack scaffold 311 may form a pillar of the rack frame 310.

The rack frame 310 may include a rack deck 312. The rack deck 312 may form the shape of a board or plate. For example, the rack deck 312 may form an upper surface and a lower surface.

The rack deck 312 may be coupled or fastened to the rack scaffold 311. The rack deck 312 may serve as a shelf. For example, a plurality of battery cells may be loaded on the rack deck 312.

The rack deck 312 may extend or form an elongated shape in one direction. For example, the rack deck 312 may extend or form an elongated shape in a front-rear direction. A longitudinal direction of the rack deck 312 may be the front-rear direction.

A plurality of rack decks 312 may be provided. For example, the rack frame 310 may include a plurality of rack decks 312. At least a portion of the plurality of rack decks 312 may be arranged to be spaced apart up and down.

For example, in two rack decks 312 that are adjacent to each other in the up-down direction, a lower surface of the rack deck 312 disposed above may face an upper surface of the rack deck 312 disposed below.

The rack frame 310 may have rigidity. For example, the rack frame 310 may be formed of a material containing metal. For example, the rack frame 310 may be electrically conductive.

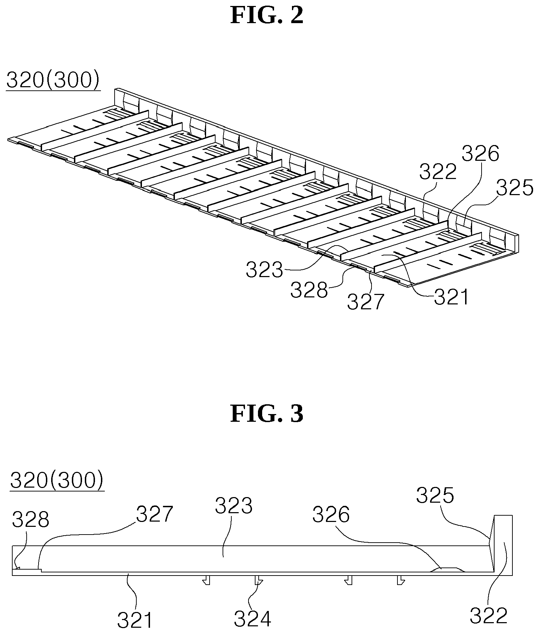

FIG. 2 illustrates a tray based on an embodiment of the disclosed technology. FIG. 3 illustrates a tray illustrated in FIG. 2 when viewed from another angle.

Referring to FIGS. 2 and 3, a tray 320 may be formed of a material containing an electrical insulating material. For example, the tray 320 may be formed of a material containing a polymer compound or plastic.

The tray 320 may include a tray body 321. The tray body 321 may form the shape of a board or plate. For example, the tray body 321 may form two surfaces.

For example, the tray body 321 may form an upper surface and a lower surface. A thickness of the tray body 321 may be a distance between the upper surface and the lower surface of the tray body 321.

The tray body 321 may extend or form an elongated shape in one direction. For example, the direction in which the tray body 321 is extended or elongated may be a longitudinal direction of the tray body 321. For example, the longitudinal direction of the tray body 321 may be the front-rear direction.

An edge and another edge of the tray body 321 may be positioned opposite to each other. The edge and the another edge of the tray body 321 may extend in the longitudinal direction of the tray body 321. A width direction of the tray body 321 may be parallel to a direction from the edge of the tray body 321 to the another edge of the tray body 321.

The tray 320 may include a tray wall 322. The tray wall 322 may extend from the edge of the tray body 321. For example, the tray wall 322 may extend rearward from a side of a front end of the tray body 321 and lead to a side of a rear end of the tray body 321. For example, the tray wall 322 may extend upward from the edge of the tray body 321. The tray wall 322 may form a height relative to the tray body 321.

The tray 320 may include a tray partition 323. The tray partition 323 may be positioned or disposed on one surface of the tray body 321. For example, the tray partition 323 may protrude from the upper surface of the tray body 321.

The tray partition 323 may extend or form an elongated shape in the width direction of the tray body 321. For example, an end of the tray partition 323 may be connected or adjacent to the tray wall 322, and another end of the tray partition 323 may be connected or adjacent to the another end of the tray body 321.

A plurality of tray partitions 323 may be provided. For example, the tray 320 may include a plurality of tray partitions 323. The plurality of tray partitions 323 may be arranged in the longitudinal direction of the tray body 321. For example, the plurality of tray partitions 323 may be arranged in the front-rear direction.

The plurality of tray partitions 323 may be spaced apart from each other. For example, a distance between two adjacent tray partitions 323 of the plurality of tray partitions 323 may be based on a size of the battery cell mounted on the tray 320.

The tray 320 may include a tray contactor 325. The tray contactor 325 may be connected or coupled to or formed on the tray wall 322. The tray contactor 325 may protrude from the tray wall 322. For example, the tray contactor 325 may protrude from the tray wall 322 toward the another edge of the tray body 321.

The tray 320 may include a tray saddle 326. The tray saddle 326 may be positioned on or coupled or connected to the upper surface of the tray body 321. For example, the tray saddle 326 may protrude from the upper surface of the tray body 321. The tray saddle 326 may be adjacent to the tray wall 322.

A plurality of tray saddles 326 may be provided. For example, the tray 320 may include a plurality of tray saddles 326. The plurality of tray saddles 326 may be arranged in the longitudinal direction of the tray body 321.

For example, the plurality of tray saddles 326 and the plurality of tray partitions 323 may be arranged in the longitudinal direction of the tray body 321 and may be alternately disposed. For example, one tray partition 323 of the plurality of tray partitions 323 may be disposed between two adjacent tray saddles 326 of the plurality of tray saddles 326.

The tray 320 may include a tray seat 327. The tray seat 327 may be formed on or coupled to the upper surface of the tray body 321. The tray seat 327 may protrude from the upper surface of the tray body 321.

The tray seat 327 may be positioned on or connected or adjacent to the another edge of the tray body 321. For example, the tray seat 327 may be positioned opposite the tray saddle 326.

A plurality of tray seats 327 may be provided. For example, the tray 320 may include a plurality of tray seats 327. The plurality of tray seats 327 may respectively correspond to the plurality of tray saddles 326.

The tray seat 327, the tray body 321, and the tray saddle 326 may form a concave upward shape. When the battery cell is mounted on the tray 320, the tray seat 327 and the tray saddle 326 may be in contact with the battery cell, and the tray body 321 may be spaced apart from the battery cell.

Hence, a refrigerant gas can flow through a gap between the battery cell and the tray body 321, and thus the battery cell can be effectively cooled. In addition, when swelling occurs in the battery cell, the gap between the battery cell and the tray body 321 can accommodate the swollen battery cell.

The tray 320 may include a tray stopper 328. The tray stopper 328 may be positioned at or adjacent or connected to the another end of the tray body 321. The tray stopper 328 may be positioned on or coupled to the upper surface of the tray seat 327. The tray stopper 328 may protrude upward from the tray seat 327.

When the battery cell is mounted on the tray 320, the battery cell may be disposed between the tray stopper 328 and the tray contactor 325. The tray stopper 328 and the tray contactor 325 can prevent movement of the battery cell. For example, the tray stopper 328 and the tray contactor 325 can prevent the battery cell from moving in the width direction of the tray body 321.

The tray 320 may be coupled or fastened to the rack frame 310 (see FIG. 1). For example, the tray 320 may include a tray coupler 324. The tray coupler 324 may be positioned on or coupled or connected to the tray body 321. The tray coupler 324 may protrude downward from the lower surface of the tray body 321.

The tray coupler 324 may be coupled or fastened to the rack frame 310 (see FIG. 1). The tray coupler 324 may form a hook shape. For example, the tray coupler 324 may be coupled or fastened to the rack deck 312 (see FIG. 1).

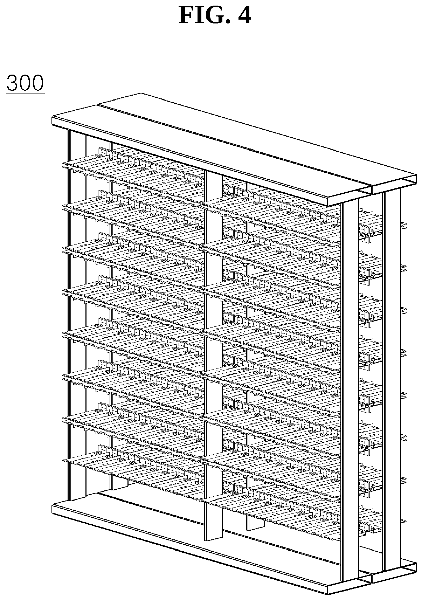

FIG. 4 illustrates a rack assembly including a tray and a rack frame.

Referring to FIGS. 1 to 4, the tray 320 may be coupled to the rack frame 310. For example, the tray 320 may be coupled to the rack deck 312. For example, each of the upper surface and the lower surface of the rack deck 312 may be coupled to the tray 320.

For example, one rack deck 312 may be coupled to two trays 320. For example, the two trays 320 may be disposed between two rack decks 312 adjacent to each other in the up-down direction. For example, when one surface of one rack deck 312 of the two adjacent rack decks 312 faces the other rack deck 312, the tray 320 may be coupled or fastened to the one surface of the one rack deck 312.

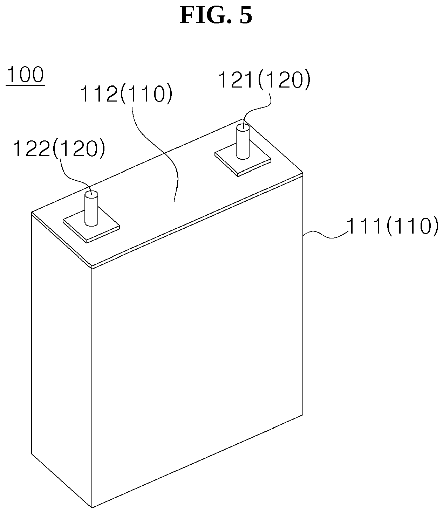

FIG. 5 illustrates a battery cell based on an embodiment of the disclosed technology. Referring to FIG. 5, a battery cell 100 may include a cell body 110. The cell body 110 may include a cell case 111.

The cell case 111 may form at least a portion of an external appearance of the cell body 110. The cell case 111 may form a space inside. For example, the space formed in the cell case 111 may be open toward or from one side. For example, the cell case 111 may form an open space facing upward. For example, the space formed in the cell case 111 may be open at a top of the cell case 111.

The cell body 110 may include an electrode assembly (not shown). The electrode assembly may include an anode, a cathode, and a separator. The cell case 111 may accommodate the electrode assembly. The cell case 111 may accommodate an electrolyte.

The cell body 110 may include a cap assembly 112. The cap assembly 112 may be coupled or connected or fastened to the cell case 111. The cap assembly 112 may form another portion of the external appearance of the cell body 110. The cap assembly 112 may form the shape of a board or plate.

For example, the cap assembly 112 may form one surface of the cell body 110. For example, the cap assembly 112 may form an upper surface of the cell body 110. The cap assembly 112 may block the open space formed in the cell case 111.

The battery cell 100 may include an electrode lead 120. The electrode lead 120 may be connected to the electrode assembly (not shown). For example, the electrode lead 120 may extend from the electrode assembly (not shown).

The electrode lead 120 may protrude from the cell body 110. For example, the electrode lead 120 may protrude from the cap assembly 112. For example, the electrode lead 120 may protrude outward from an outer surface of the cap assembly 112. The electrode lead 120 may form a pillar shape. For example, the electrode lead 120 may have a cylindrical shape.

A plurality of electrode leads 120 may be provided. For example, the electrode lead 120 may include a first electrode lead 121 and a second electrode lead 122. For example, the first electrode lead 121 and the second electrode lead 122 may be spaced apart from each other. For example, the first electrode lead 121 and the second electrode lead 122 may be positioned on or coupled to the cap assembly 112.

For another example, the space formed in the cell case 111 may be open on both sides. For example, the space formed in the cell case 111 may be open upward and downward.

In this case, two cap assemblies 112 may be provided. For example, the upper cap assembly 112 may be coupled to the top of the cell case 111, and the lower cap assembly 112 may be coupled to a bottom of the cell case 111. In this case, the first electrode lead 121 may be coupled to or positioned on the upper cap assembly 112, and the second electrode lead 122 may be coupled to or positioned on the lower cap assembly 112.

FIG. 5 illustrates that the battery cell 100 is positioned so that the cap assembly 112 faces upward, but a posture of the battery cell 100 loaded on the rack assembly 300 (see FIG. 4) is not limited to that illustrated in FIG. 5. For example, in a state in which the battery cell 100 is loaded on the rack assembly 300 (see FIG. 4), the cap assembly 112 may face toward a horizontal direction, and the cell case 111 may face the rack deck 312 (see FIG. 1).

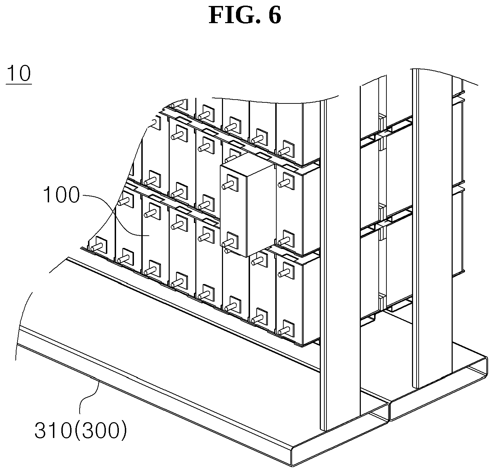

FIG. 6 illustrates a battery pack based on an embodiment of the disclosed technology. Only a portion of a battery pack 10 may be illustrated in FIG. 6 for convenience of explanation.

Referring to FIGS. 1 to 6, the plurality of battery cells 100 may be stacked in one direction. For example, the plurality of battery cells 100 may be arranged in the horizontal direction between the two rack decks 312 that are adjacent to each other in the up-down direction. For example, the plurality of battery cells 100 may be arranged back and forth between the two rack decks 312 that are adjacent to each other in the up-down direction.

The battery cells 100 may be sandwiched between the two rack decks 312 adjacent to each other in the up-down direction. For example, when the battery cells 100 move in a direction facing toward the surface positioned opposite the cap assembly 112 among the surfaces of the cell case 111, the battery cells 100 may be sandwiched between the two rack decks 312 adjacent to each other in the up-down direction.

When the battery cells 100 move in the direction toward which the cap assembly 112 faces, the battery cells 100 sandwiched between the two rack decks 312 adjacent to each other in the up-down direction may be separated from the rack assembly 300. In this way, the battery cells 100 can be easily coupled to or separated from the rack assembly 300.

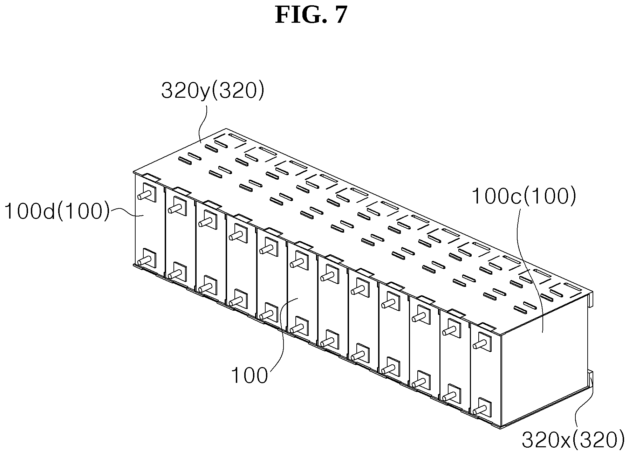

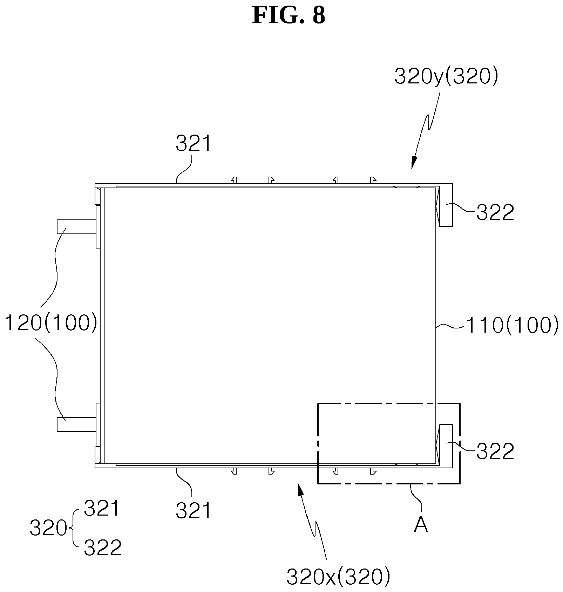

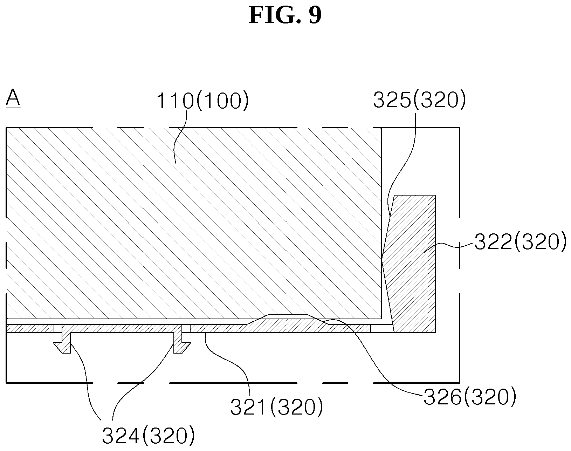

FIG. 7 partially illustrates the battery cell and the tray illustrated in FIG. 6. FIG. 8 illustrates the battery cell and the tray illustrated in FIG. 7 when viewed from another angle. FIG. 9 illustrates an area 'A' illustrated in FIG. 8.

Referring to FIG. 1 to 9, the tray 320 may include a lower tray 320x and an upper tray 320y. The lower tray 320x and the upper tray 320y may be arranged symmetrically. The plurality of battery cells 100 may be positioned between the two trays 320.

The plurality of battery cells 100 may be arranged in one direction. For example, the plurality of battery cells 100 may be arranged between the lower tray 320x and the upper tray 320y in the front-rear direction.

For example, the plurality of battery cells 100 may include a front battery cell 100c and a rear battery cell 100d. The front battery cell 100c may be positioned at the most front among the plurality of battery cells 100. The rear battery cell 100d may be positioned at the most rear among the plurality of battery cells 100.

For example, the lower tray 320x may be positioned below the plurality of battery cells 100. The lower tray 320x may support the plurality of battery cells 100. The lower tray 320x may face or contact the lower surfaces of the plurality of battery cells 100. The lower tray 320x may face or contact one surfaces of the cell cases 111 of the plurality of battery cells 100.

For example, the upper tray 320y may be positioned above the plurality of battery cells 100. The upper tray 320y may face or contact the upper surfaces of the plurality of battery cells 100. The upper tray 320y may face or contact other surfaces of the cell cases 111 of the plurality of battery cells 100.

The cap assemblies 112 of the plurality of battery cells 100 may be arranged back and forth. The cap assemblies 112 of the plurality of battery cells 100 may face or be directed toward one direction. For example, the cap assemblies 112 of the plurality of battery cells 100 may face or be directed toward the horizontal direction.

The cap assembly 112 of each of the plurality of battery cells 100 may extend or form an elongated shape in one direction. For example, the cap assembly 112 of each of the plurality of battery cells 100 may extend or form an elongated shape in the up-down direction. For example, the cap assembly 112 of each of the plurality of battery cells 100 may extend upward from the lower tray 320x and lead to the upper tray 320y.

The first electrode lead 121 and the second electrode lead 122 of each of the plurality of battery cells 100 may be arranged up and down. For example, in each of the plurality of battery cells 100, the first electrode lead 121 may be positioned above or below the second electrode lead 122.

For example, in two adjacent battery cells 100 of the plurality of battery cells 100, the first electrode lead 121 of the preceding battery cell 100 may be positioned in front of the second electrode lead 122 of the subsequent battery cell 100.

For example, in the two adjacent battery cells 100 of the plurality of battery cells 100, the second electrode lead 122 of the preceding battery cell 100 may be positioned in front of the first electrode lead 121 of the subsequent battery cell 100.

The tray partition 323 may be positioned between the two adjacent battery cells 100 of the plurality of battery cells 100. Each of the plurality of tray seats 327 may be coupled to or in contact with each corresponding battery cell 100 of the plurality of battery cells 100. Each of the plurality of tray saddles 326 may be coupled to or in contact with each corresponding battery cell 100 of the plurality of battery cells 100. Each of the plurality of tray contactors 325 may be coupled to or in contact with each corresponding battery cell 100 of the plurality of battery cells 100. Each of the plurality of tray stoppers 328 may be coupled to or in contact with each corresponding battery cell 100 of the plurality of battery cells 100.

The tray contactor 325 may support the battery cell 100. For example, the tray contactor 325 may support the battery cell 100 on the opposite side of the cap assembly 112 or on the opposite side of the electrode lead 120.

The tray contactor 325 may be convex toward the battery cell 100. For example, one surface of the tray contactor 325 may be inclined with respect to the battery cell 100. Hence, an area of the surface where the tray contactor 325 and the battery cell 100 contact each other may be relatively small.

The tray seat 327 and the tray saddle 326 may support the battery cell 100. For example, the tray seats 327 and the tray saddles 326 of the lower tray 320x may support the battery cells 100 below the battery cells 100. For example, the tray seats 327 and the tray saddles 326 of the upper tray 320y may support the battery cells 100 above the battery cells 100.

A gap may be formed between the tray body 321 and the battery cell 100. The tray seat 327, the tray body 321, and the tray saddle 326 may be concave toward the battery cell 100. Even if the battery cell 100 swells, at least a portion of an increased volume of the battery cell 100 may be accommodated between the tray seat 327 and the tray saddle 326.

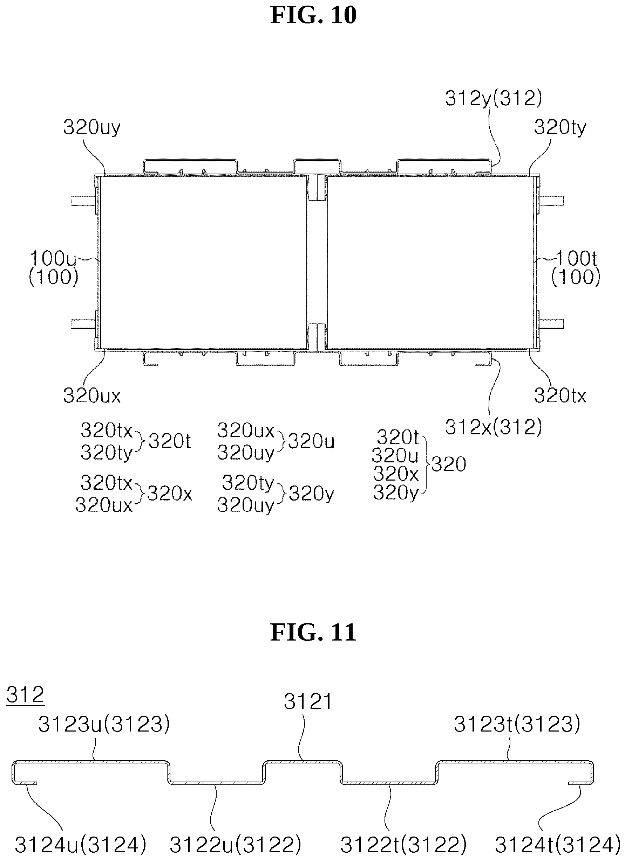

FIG. 10 illustrates a portion of a cross section of the battery pack illustrated in FIG. 6. FIG. 11 illustrates in detail the rack deck illustrated in FIG. 10. From FIGS. 10 and 11, a cross section of the rack deck 312 and the battery cell 100 cut perpendicular to the longitudinal direction of the rack deck 312 may be observed. For example, the longitudinal direction of the rack deck 312 may be the front-rear direction. For example, the longitudinal direction of the rack deck 312 may be a direction in which the plurality of battery cells 100 are stacked.

Referring to FIGS. 10 and 11, the rack deck 312 may be coupled or fastened to the rack scaffold 311 (see FIG. 1). For example, the rack scaffold 311 (see FIG. 1) may support the rack deck 312. For example, a front end and a rear end of the rack deck 312 may be coupled or fastened to the rack scaffold 311 (see FIG. 1).

The rack deck 312 may include a rack deck core 3121. The rack deck core 3121 may form the center of the rack deck 312. The rack deck core 3121 may form an upward convex shape. The rack deck core 3121 may be elongated or extended in the longitudinal direction of the rack deck 312.

The rack deck 312 may include a rack deck concave portion 3122. The rack deck concave portion 3122 may extend from the rack deck core 3121. For example, the rack deck concave portion 3122 may extend from the rack deck core 3121 in a width direction of the rack deck 312.

The rack deck concave portion 3122 may extend in both directions from the rack deck core 3121. A first width direction and a second width direction may be parallel to the width direction of the rack deck 312. The first width direction and the second width direction may be opposite directions.

For example, the rack deck concave portion 3122 may include a first rack deck concave portion 3122t extending from the rack deck core 3121 in the first width direction. For example, the rack deck concave portion 3122 may include a second rack deck concave portion 3122u extending from the rack deck core 3121 in the second width direction.

The first width direction may be a direction from the rack deck core 3121 toward the first rack deck concave portion 3122t. The second width direction may be a direction from the rack deck core 3121 toward the second rack deck concave portion 3122u.

The rack deck concave portion 3122 may include or indicate at least one of the first rack deck concave portion 3122t or the second rack deck concave portion 3122u. The rack deck concave portion 3122 may be convex downward. The rack deck concave portion 3122 may be concave upward.

The rack deck 312 may include a rack deck convex portion 3123. The rack deck convex portion 3123 may extend from the rack deck concave portion 3122. For example, the rack deck convex portion 3123 may extend from the rack deck concave portion 3122 in the width direction of the rack deck 312.

For example, the rack deck convex portion 3123 may include a first rack deck convex portion 3123t extending from the first rack deck concave portion 3122t in the first width direction. For example, the rack deck convex portion 3123 may include a second rack deck convex portion 3123u extending from the second rack deck concave portion 3122u in the second width direction.

The rack deck convex portion 3123 may include or indicate at least one of the first rack deck convex portion 3123t or the second rack deck convex portion 3123u. The rack deck convex portion 3123 may be convex upward. The rack deck convex portion 3123 may be concave downward.

The rack deck 312 may include a rack deck end 3124. The rack deck end 3124 may be formed to extend downward from the rack deck convex portion 3123. For example, the rack deck end 3124 may be formed to extend downward from an end of the rack deck convex portion 3123 and bend and extend toward the rack deck core 3121.

For example, the rack deck end 3124 may include a first rack deck end 3124t extending downward from the first rack deck convex portion 3123t. For example, the rack deck end 3124 may include a second rack deck end 3124u extending downward from the second rack deck convex portion 3123u.

The rack deck end 3124 may include or indicate at least one of the first rack deck end 3124t or the second rack deck end 3124u. The rack deck end 3124 may face downward. The rack deck end 3124 may be concave toward the rack deck core 3121.

The rack deck concave portion 3122 and the rack deck convex portion 3123 may be concave or convex toward different directions. Through the structure, the rack deck 312 may have elasticity. The rack deck 312 may be formed of a material containing metal. Because the rack deck 312 has the elasticity, the battery cell 100 can be easily loaded on the rack assembly 300 (see FIG. 1) or easily separated from the rack assembly 300 (see FIG. 1).

The battery cell 100 may be disposed between the two rack decks 312 adjacent to each other in the up-down direction. For example, a lower rack deck 312x may be positioned below the battery cell 100. For example, an upper rack deck 312y may be positioned above the battery cell 100. The tray 320 may be coupled to the rack deck 312.

For example, the lower tray 320x may be disposed above the lower rack deck 312x and coupled to the lower rack deck 312x. For example, the lower tray 320x may be coupled to the rack deck convex portion 3123 of the lower rack deck 312x. For example, the rack deck convex portion 3123 of the lower rack deck 312x below the lower tray 320x may support the lower tray 320x.

For example, the upper tray 320y may be disposed below the upper rack deck 312y and coupled to the upper rack deck 312y. For example, the upper tray 320y may be coupled to the rack deck concave portion 3122 of the upper rack deck 312y. For example, the rack deck concave portion 3122 of the upper rack deck 312y above the upper tray 320y may support the upper tray 320y.

The plurality of trays 320 may be disposed on both sides of the rack deck 312 based on the width direction of the rack deck 312.

For example, a first tray 320t may be coupled to the first rack deck concave portion 3122t or the first rack deck convex portion 3123t. For example, a first lower tray 320tx may be coupled to the first rack deck convex portion 3123t of the lower rack deck 312x. For example, a first upper tray 320ty may be coupled to the first rack deck concave portion 3122t of the upper rack deck 312y. The first tray 320t may include or indicate at least one of the first lower tray 320tx or the first upper tray 320ty.

For example, a second tray 320u may be coupled to the second rack deck concave portion 3122u or the second rack deck convex portion 3123u. For example, a second lower tray 320ux may be coupled to the second rack deck convex portion 3123u of the lower rack deck 312x. For example, a second upper tray 320uy may be coupled to the second rack deck concave portion 3122u of the upper rack deck 312y. The second tray 320u may include or indicate at least one of the second lower tray 320ux or the second upper tray 320uy.

The lower tray 320x may include or indicate at least one of the first lower tray 320tx or the second lower tray 320ux. The upper tray 320y may include or indicate at least one of the first upper tray 320ty or the second upper tray 320uy.

The battery cell 100 may include a first battery cell 100t and a second battery cell 100u. The battery cell 100 may include or indicate at least one of the first battery cell 100t or the second battery cell 100u.

The first battery cell 100t may be positioned between the first lower tray 320tx and the first upper tray 320ty. The second battery cell 100u may be positioned between the second lower tray 320ux and the second upper tray 320uy.

The cap assembly 112 (see FIG. 5) of the first battery cell 100t may be directed toward or face the first width direction. The cap assembly 112 (see FIG. 5) of the second battery cell 100u may be directed toward or face the second width direction.

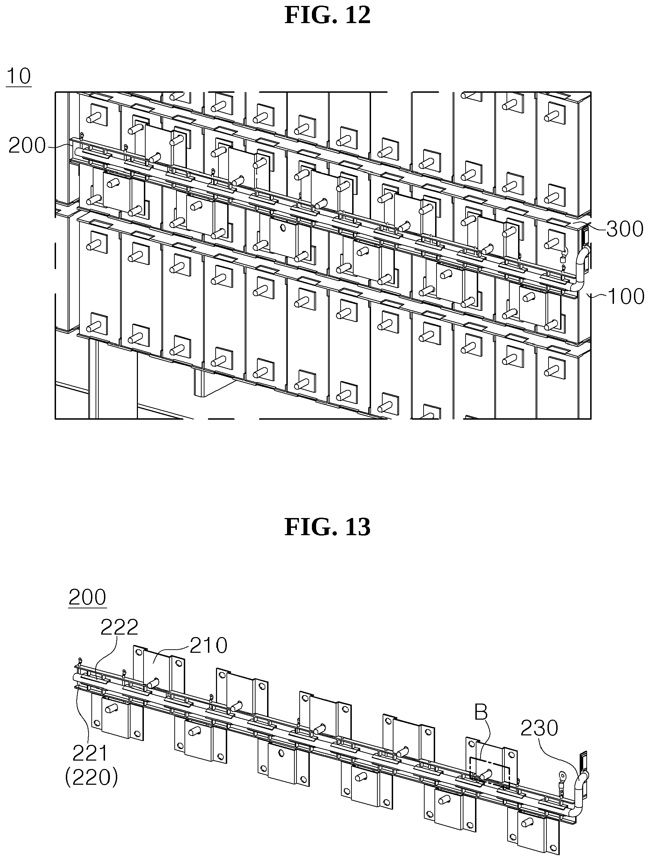

FIG. 12 illustrates that a bus bar assembly is coupled to the battery cells loaded on the rack assembly.

Referring to FIG. 12, the plurality of battery cells 100 may be stacked in the front-rear direction. For example, the plurality of battery cells 100 may be positioned between the two adjacent rack decks 312 (see FIG. 1) disposed up and down.

The plurality of battery cells 100 stacked in the front-rear direction may be connected by a bus bar assembly 200. The bus bar assembly 200 may be extended or elongated in the front-rear direction. The bus bar assembly 200 may face the cap assemblies 112 (see FIG. 5) of the plurality of battery cells 100. For example, the bus bar assembly 200 may be connected or coupled to the electrode leads 120 (see FIG. 5) of the plurality of battery cells 100.

FIG. 13 is a perspective view of the bus bar assembly based on an embodiment of the disclosed technology.

Referring to FIG. 13, the bus bar assembly 200 may include bus bars 210. The bus bar 210 may be formed of a conductive material. For example, the bus bar 210 may be formed of a material containing metal.

The bus bar 210 may connect two adjacent battery cells 100 (see FIG. 12). For example, the bus bar 210 may be coupled to two battery cells 100 (see FIG. 12) adjacent to each other in the front-rear direction.

For example, when the two battery cells 100 (see FIG. 12) adjacent to each other in the front-rear direction are electrically connected by the bus bar 210, a front end of the bus bar 210 may be coupled to the first electrode lead 121 (see FIG. 5) of the preceding battery cell 100 (see FIG. 12), and a rear end of the bus bar 210 may be coupled to the second electrode lead 122 (see FIG. 5) of the subsequent battery cell 100 (see FIG. 12). A polarity of the first electrode lead 121 (see FIG. 5) of the preceding battery cell 100 (see FIG. 12) may be opposite to a polarity of the second electrode lead 122 (see FIG. 5) of the subsequent battery cell 100 (see FIG. 12).

The bus bar assembly 200 may include a support frame 220. The support frame 220 may include a frame body 221. The frame body 221 may be extended or elongated in one direction. For example, the frame body 221 may be extended or elongated in the front-rear direction. The frame body 221 may be formed of an insulating material. For example, the frame body 221 may be formed of a material containing a polymer material or plastic.

The frame body 221 may face the cap assemblies 112 (see FIG. 5) of the plurality of battery cells 100. For example, an inner surface of the frame body 221 may face the cap assemblies 112 (see FIG. 5) of the plurality of battery cells 100.

The frame body 221 may be positioned between the first electrode lead 121 (see FIG. 5) and the second electrode lead 122 (see FIG. 5) of each of the plurality of battery cells 100. For example, the frame body 221 may cross between the first electrode lead 121 (see FIG. 5) and the second electrode lead 122 (see FIG. 5) of each of the plurality of battery cells 100.

The support frame 220 may be coupled to the plurality of bus bars 210. For example, a portion of the plurality of bus bars 210 may be coupled to an upper end of the support frame 220. For example, another portion of the plurality of bus bars 210 may be coupled to a lower end of the support frame 220.

The support frame 220 may include a wire holder 222. The wire holder 222 may be positioned or formed on or coupled to the frame body 221. The wire holder 222 may be positioned or formed on or coupled to an outer surface of the frame body 221.

The wire holder 222 may be coupled to a wire unit 230. For example, a wire of the wire unit 230 may be mounted on the wire holder 222. The wire unit 230 may be coupled to the bus bar 210 to obtain information on the battery cell 100 (see FIG. 12).

A plurality of wire holders 222 may be provided. The plurality of wire holders 222 may be arranged to be spaced apart from each other in the front-rear direction. The wire of the wire unit 230 may be disposed along the plurality of wire holders 222.

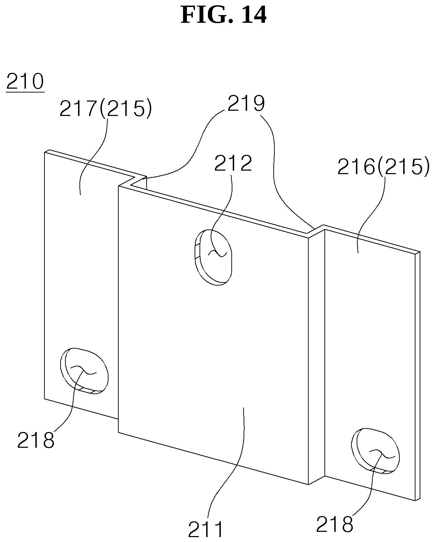

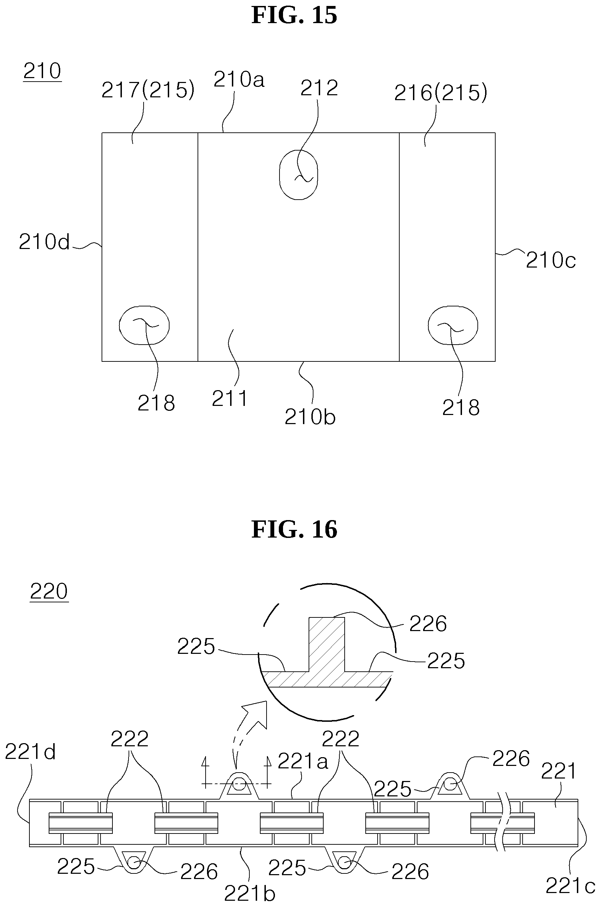

FIG. 14 is a perspective view of the bus bar based on an embodiment of the disclosed technology. FIG. 15 is a plan view of the bus bar illustrated in FIG. 14.

Referring to FIGS. 14 and 15, the bus bar 210 may include a bus bar body 211. The bus bar body 211 may form a center portion of the bus bar 210. The bus bar body 211 may face a boundary of two battery cells 100 (see FIG. 12) adjacent to each other in the front-rear direction.

For example, an inner surface of the bus bar body 211 may face the boundary of the two adjacent battery cells 100 (see FIG. 12). The inner surface of the bus bar body 211 may be spaced apart from the battery cell 100 (see FIG. 12). In other words, a gap may be formed between the bus bar body 211 and the battery cell 100 (see FIG. 12).

The bus bar body 211 may be coupled to the support frame 220 (see FIG. 13). For example, the bus bar 210 may include a frame coupling hole 212. The frame coupling hole 212 may be an opening formed in the bus bar body 211.

The frame coupling hole 212 may extend from the inner surface of the bus bar body 211 and lead to an outer surface of the bus bar body 211. A protrusion formed on the support frame 220 (see FIG. 13) may be inserted into the frame coupling hole 212.

The frame coupling hole 212 may be elongated in the up-down direction. The protrusion formed on the support frame 220 (see FIG. 13) may move in the up-down direction in the frame coupling hole 212.

The support frame 220 (see FIG. 13) and the bus bar 210 may be disposed up and down. Thus, the support frame 220 (see FIG. 13) and the bus bar 210 can be easily coupled to each other by the frame coupling hole 212 elongated in the up-down direction.

The bus bar 210 may include a bus bar wing 215. The bus bar wing 215 may extend from the bus bar body 211. The bus bar 210 may be concave toward the battery cell 100 (see FIG. 5). For example, the inner surface of the bus bar 210 may be concave. The inner surface of the bus bar 210 may face the battery cell 100 (see FIG. 5).

A plurality of bus bar wings 215 may be provided. For example, the bus bar 210 may include a front bus bar wing 216 and a rear bus bar wing 217. The bus bar wing 215 may include or indicate at least one of the front bus bar wing 216 or the rear bus bar wing 217.

The bus bar wing 215 may form a step with the bus bar body 211. For example, the bus bar wing 215 may be bent and extended from a front end or a rear end of the bus bar body 211 toward the battery cell 100 (see FIG. 12) and may extend forward or rearward.

For example, the front bus bar wing 216 may be bent and extended from the front end of the bus bar body 211 toward the battery cell 100 (see FIG. 12) and may extend forward. For example, the bus bar 210 may include a bus bar link 219 that is bent and extended from the front end of the bus bar body 211 toward the battery cell 100 (see FIG. 12). The front bus bar wing 216 may extend forward from an end of the bus bar link 219.

For example, the rear bus bar wing 217 may be bent and extended from the rear end of the bus bar body 211 toward the battery cell 100 (see FIG. 12) and may extend rearward. For example, the bus bar 210 may include a bus bar link 219 that is bent and extended from the rear end of the bus bar body 211 toward the battery cell 100 (see FIG. 12). The rear bus bar wing 217 may extend rearward from an end of the bus bar link 219.

The bus bar wing 215 may face the cap assembly 112 (see FIG. 5) of the battery cell 100 (see FIG. 12). For example, an inner surface of the bus bar wing 215 may face the cap assembly 112 (see FIG. 5) of the battery cell 100 (see FIG. 12).

The bus bar wing 215 may be coupled to the electrode lead 120 (see FIG. 5) of the battery cell 100 (see FIG. 12). For example, the bus bar 210 may include a cell coupling hole 218. The cell coupling hole 218 may be an opening or a hole formed in the bus bar wing 215.

For example, when the bus bar 210 connects two battery cells 100 (see FIG. 12) adjacent to each other in the front-rear direction, the electrode lead 120 (see FIG. 5) of the preceding battery cell 100 (see FIG. 12) may be coupled to the cell coupling hole 218 formed in the front bus bar wing 216, and the electrode lead 120 (see FIG. 5) of the subsequent battery cell 100 (see FIG. 12) may be coupled to the cell coupling hole 218 formed in the rear bus bar wing 217.

The cell coupling hole 218 may be elongated in the front-rear direction. The electrode lead 120 (see FIG. 5) of the battery cell 100 (see FIG. 12) may be inserted into the cell coupling hole 218. The cell coupling hole 218 may extend from the inner surface of the bus bar wing 215 and lead to an outer surface of the bus bar wing 215.

A thread may be formed on an outer surface of the electrode lead 120 (see FIG. 5). In a state in which the electrode lead 120 (see FIG. 5) is inserted into the cell coupling hole 218, a nut (not shown) may be screwed to the electrode lead 120 (see FIG. 5).

The electrode lead 120 (see FIG. 5) of the battery cell 100 (see FIG. 12) may move in the front-rear direction in the cell coupling hole 218. Thus, even if a front-rear direction thickness of the battery cell 100 (see FIG. 12) changes, the coupling between the electrode lead 120 (see FIG. 5) and the bus bar 210 can be easily maintained.

The bus bar 210 may form a perimeter based on the inner surface or the outer surface of the bus bar 210. For example, an upper bus bar edge 210a may form a portion of the perimeter of the bus bar 210 and form an upper end of the bus bar 210. For example, a lower bus bar edge 210b may form a portion of the perimeter of the bus bar 210 and form a lower end of the bus bar 210.

For example, a front bus bar edge 210c may form a portion of the perimeter of the bus bar 210 and form a front end of the bus bar 210. The front bus bar edge 210c may be formed on the front bus bar wing 216.

For example, a rear bus bar edge 210d may form a portion of the perimeter of the bus bar 210 and form a rear end of the bus bar 210. The rear bus bar edge 210d may be formed on the rear bus bar wing 217.

FIG. 16 is a plan view of a support frame based on an embodiment of the disclosed technology. In FIG. 16, an outer surface of the support frame 220 may be observed. A direction toward which the outer surface of the support frame 220 faces may be opposite to a direction toward which an inner surface of the support frame 220 faces. The inner surface of the support frame 220 may be directed toward or face the battery cell 100 (see FIG. 12).

Referring to FIG. 16, the support frame 220 may include the frame body 221. The frame body 221 may be elongated or extended in the direction in which the plurality of battery cells 100 (see FIG. 12) are stacked. For example, the frame body 221 may be elongated or extended in the front-rear direction.

The frame body 221 may form a perimeter based on the inner surface or the outer surface of the frame body 221. For example, an upper frame body edge 221a may form a portion of the perimeter of the frame body 221 and form an upper end of the frame body 221. For example, a lower frame body edge 221b may form a portion of the perimeter of the frame body 221 and form a lower end of the frame body 221.

For example, a front frame body edge 221c may form a portion of the perimeter of the frame body 221 and form a front end of the frame body 221. For example, a rear frame body edge 221d may form a portion of the perimeter of the frame body 221 and form a rear end of the frame body 221.

The support frame 220 may include a frame wing 225. The frame wing 225 may extend from the frame body 221 or may be coupled to the frame body 221. The frame wing 225 may be formed integrally with the frame body 221.

For example, the frame wing 225 may extend upward from the upper frame body edge 221a of the frame body 221. For example, the frame wing 225 may extend downward from the lower frame body edge 221b of the frame body 221.

The support frame 220 may include a frame rib 226. The frame rib 226 may extend from or be coupled to the frame wing 225. For example, the frame rib 226 may protrude from an outer surface of the frame wing 225. The frame rib 226 may be formed integrally with the frame wing 225.

The frame rib 226 may be coupled to the bus bar 210 (see FIGS. 14 and 15). For example, the frame rib 226 may be inserted into and coupled to the frame coupling hole 212 (see FIGS. 14 and 15) of the bus bar 210 (see FIGS. 14 and 15).

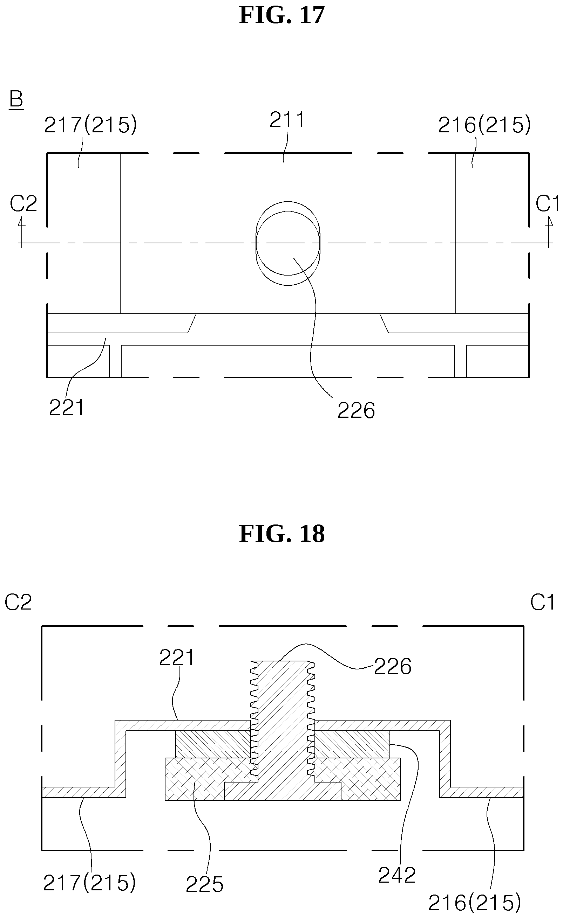

FIG. 17 illustrates a portion 'B' of FIG. 13. FIG. 18 is a cross-sectional view of the bus bar assembly taken along C1-C2 of FIG. 17.

Referring to FIGS. 17 and 18, the frame wing 225 may be positioned between the front bus bar wing 216 and the rear bus bar wing 217. The frame wing 225 may be positioned between the bus bar body 211 and the battery cell 100 (see FIG. 12). For example, the outer surface of the frame wing 225 may face the bus bar body 211. A washer 242 may be disposed between the frame wing 225 and the bus bar body 211. For example, an inner surface of the frame wing 225 may face the battery cell 100 (see FIG. 12).

The frame rib 226 may protrude from the outer surface of the frame wing 225. The frame rib 226 may be a press-fit bolt coupled to the frame wing 225. The frame rib 226 may pass through the bus bar body 211.

A thread may be formed on an outer surface of the frame rib 226. A nut (not shown) may be coupled to the frame rib 226. The wire unit 230 (see FIG. 13) may be coupled between the bus bar body 211 and the nut (not shown). Hence, the wire unit 230 (see FIG. 13) may be electrically connected to the bus bar body 211.

Referring to FIGS. 12 to 18, the bus bar assembly 200 may be coupled to the plurality of battery cells 100 stacked in the front-rear direction. A process of replacing one of the plurality of battery cells 100 stacked in the front-rear direction is described.

The bus bar assembly 200 may be separated from the plurality of battery cells 100. For example, the plurality of bus bars 210 may be separated from the plurality of battery cells 100. For example, a nut (not shown) coupled to the electrode lead 120 (see FIG. 5) may be separated from the electrode lead 120 (see FIG. 5).

The battery cell 100 to be replaced among the plurality of battery cells 100 may be taken out of the rack assembly 300. A new battery cell 100 may be loaded into the rack assembly 300.

The bus bar assembly 200 may be coupled to the plurality of battery cells 100. For example, the electrode leads 120 (see FIG. 5) of the plurality of battery cells 100 may be inserted into the cell coupling holes 218. The nut (not shown) may be coupled to the electrode lead 120 (see FIG. 5).

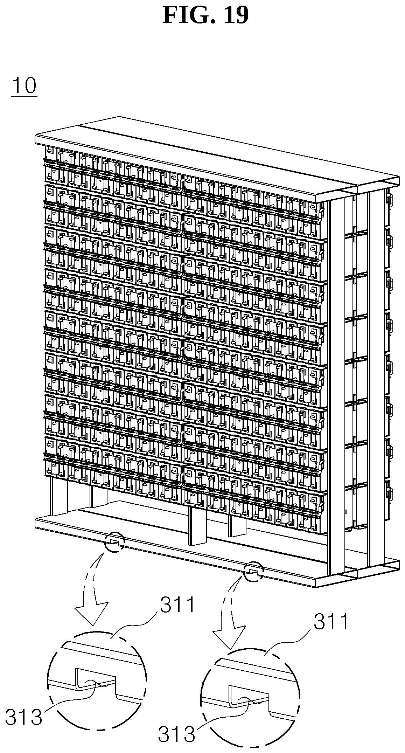

FIG. 19 is a perspective view illustrating an overall appearance of a battery pack based on an embodiment of the disclosed technology.

Referring to FIG. 19, a plurality of rack frames 310 may be provided. For example, the plurality of rack frames 310 may be arranged in one direction. For example, the plurality of rack frames 310 may be sequentially arranged in a transverse direction of the rack decks 312 (see FIG. 1) or a transverse direction of the trays 320 (see FIG. 2).

The plurality of rack frames 310 may move in the transverse direction of the rack decks 312 (see FIG. 1) or the transverse direction of the trays 320 (see FIG. 2).

The rack frame 310 may include a rack guide 313. The rack guide 313 may be formed on or coupled to the rack scaffold 311. For example, the rack guide 313 may be extended or elongated in the transverse direction of the rack deck 312 (see FIG. 1) or the transverse direction of the tray 320 (see FIG. 2).

For example, the rack guide 313 may be a groove formed at a lower end of the rack scaffold 311. For another example, the rack guide 313 may be a rail coupled to the lower end of the rack scaffold 311 or a protrusion coupled to the lower end of the rack scaffold 311.

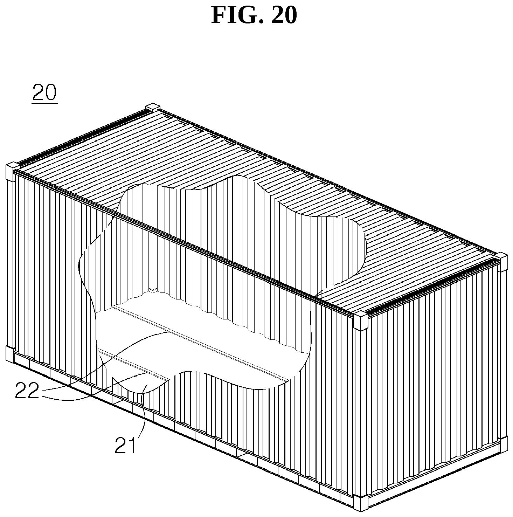

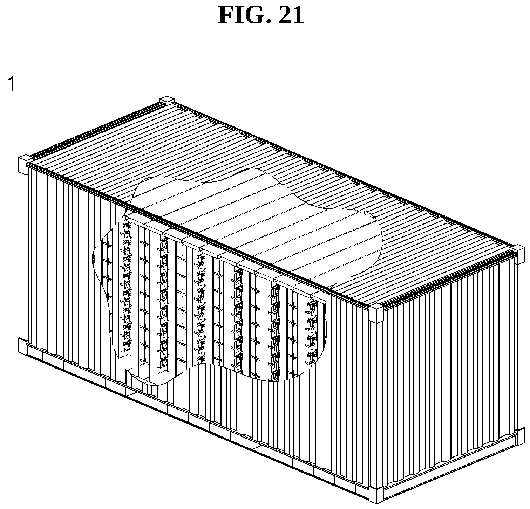

FIG. 20 illustrates an energy storage house based an embodiment of the disclosed technology. FIG. 21 illustrates an energy storage system based an embodiment of the disclosed technology.

Referring to FIGS. 20 and 21, an energy storage system 1 based an embodiment of the disclosed technology may include an energy storage house 20 and the plurality of battery packs 10 (see FIG. 19).

The energy storage house 20 may accommodate the battery pack 10 (see FIG. 19). For example, the energy storage house 20 may accommodate the plurality of battery packs 10 (see FIG. 19).

The energy storage house 20 may include a house bottom 21. The house bottom 21 may form the bottom of the energy storage house 20. The house bottom 21 may be positioned below the battery pack 10 (see FIG. 19).

The energy storage house 20 may include a house guide 22. The house guide 22 may be formed on or coupled to the house bottom 21. The house guide 22 may be extended or elongated in a longitudinal direction.

For example, the longitudinal direction of the house guide 22 may be parallel to a direction in which the plurality of battery packs 10 (see FIG. 19) are arranged. For example, the longitudinal direction of the house guide 22 may be parallel to the transverse direction of the rack deck 312 (see FIG. 1) or the transverse direction of the tray 320 (see FIG. 2).

The house guide 22 may be coupled to the rack guide 313 (see FIG. 19). The house guide 22 may guide the movement of the battery pack 10 (see FIG. 19). The battery pack 10 (see FIG. 19) may move along the house guide 22.

The rack guide 313 and the house guide 22 may be engaged with each other. For example, the house guide 22 may include a rail, and the rack guide 313 (see FIG. 19) may include a groove formed on a lower surface of the rack scaffold 311 (see FIG. 19). For example, the house guide 22 may include a groove formed on the house bottom 21, and the rack guide 313 (see FIG. 19) may include a rail or a protrusion.

Some embodiments or other embodiments of the disclosed technology described above are not mutually exclusive or distinct from each other. Configurations or functions of some embodiments or other embodiments of the disclosed technology described above can be used together or combined with each other. Only specific examples of implementations of certain embodiments are described. Variations, improvements and enhancements of the disclosed embodiments and other embodiments may be made based on the disclosure of this patent document.

## Claims

1. A rack assembly (300) comprising:
a rack frame (310) including a rack scaffold (311) and a rack deck (312), the rack deck (312) coupled to the rack scaffold (311); and
a tray (320) coupled to the rack deck (312),
wherein the rack deck (312) is elongated in a front-rear direction,
wherein the tray (320) includes:
a tray body (321) facing the rack deck (312), the tray body (321) positioned above the rack deck (312); and
a tray wall (322) extending upward from an edge of the tray body (321),
wherein the edge of the tray body (321) extends rearward from a front end of the tray body (321) and leads to a rear end of the tray body (321).

2. The rack assembly (300) of claim 1, wherein the tray (320) further includes:
a tray saddle (326) protruding upward from the tray body (321), the tray saddle (326) being adjacent to the tray wall (322); and
a tray seat (327) protruding upward from the tray body (321), the tray seat (327) being adjacent to another edge of the tray body (321),
wherein the another edge of the tray body (321) is positioned opposite the edge of the tray body (321).

3. The rack assembly (300) of claim 2, wherein the tray (320) further includes a tray stopper (328) protruding upward from the tray seat (327), the tray stopper (328) being adjacent to the another edge of the tray body (321).

4. The rack assembly (300) of claim 2 or 3, wherein the tray (320) further includes a tray contactor (325) protruding from the tray wall (322) toward the tray seat (327).

5. A battery pack (10) comprising:
a rack assembly (300) including a rack frame (310) and a tray (320) coupled to the rack frame (310);
a plurality of battery cells (100) loaded on the tray (320) and stacked in a front-rear direction; and
a bus bar assembly (200) coupled to the plurality of battery cells (100),
wherein the rack frame (310) includes a rack scaffold (311) and a rack deck (312) coupled to the rack scaffold (311),
wherein the rack deck (312) is elongated in the front-rear direction,
wherein the tray (320) includes:
a tray body (321) facing the rack deck (312), the tray body (321) positioned above the rack deck (312);
a tray coupler (324) extending from the tray body (321), the tray coupler (324) coupled to the rack deck (312); and
a tray wall (322) extending upward from an edge of the tray body (321),
wherein the edge of the tray body (321) extends rearward from a front end of the tray body (321) and leads to a rear end of the tray body (321).

6. The battery pack (10) of claim 5, wherein the tray (320) further includes:
a plurality of tray saddles (326) protruding upward from the tray body (321), the plurality of tray saddles (326) being adjacent to the tray wall (322) and supporting the plurality of battery cells (100); and
a plurality of tray seats (327) protruding upward from the tray body (321), the plurality of tray seats (327) being adjacent to another edge of the tray body (321) and supporting the plurality of battery cells (100),
wherein the another edge of the tray body (321) is positioned opposite the edge of the tray body (321).

7. The battery pack (10) of claim 6, wherein the tray (320) further includes a tray stopper (328) protruding upward from the tray seat (327), the tray stopper (328) being adjacent to the another edge of the tray body (321), and
wherein the plurality of battery cells (100) is positioned between the tray wall (322) and the tray stopper (328)
and/or wherein the tray saddle (326) is in contact with the battery cell (100), and the tray body (321) is spaced apart from the battery cell (100).

8. The battery pack (10) of any one of claims 5 to 7, wherein the tray (320) further includes a tray contactor (325) protruding from the tray wall (322) toward the plurality of battery cells (100).

9. The battery pack (10) of any one of claims 5 to 8, wherein the tray (320) further includes a plurality of tray partitions (323) protruding upward from the tray body (321), the plurality of tray partitions (323) being disposed in the front-rear direction and partitioning the plurality of battery cells (100) in the front-rear direction, and
wherein each of the plurality of tray partitions (323) is positioned between two adjacent battery cells (100) corresponding to each tray partition (323) among the plurality of battery cells (100).

10. The battery pack (10) of any one of claims 5 to 9, wherein each of the plurality of battery cells (100) includes:
a cell body (110) including an electrode assembly; and
an electrode lead (120) protruding from an outer surface of the cell body (110),
wherein the cell body (110) is positioned between the electrode lead (120) and the tray wall (322).

11. The battery pack (10) of claim 10, wherein the bus bar assembly (200) includes a plurality of bus bars (210) coupled to the electrode leads (120) of the plurality of battery cells (100), and
wherein each of the plurality of bus bars (210) is coupled to two adjacent battery cells (100) corresponding to each bus bar (210) among the plurality of battery cells (100).

12. The battery pack (10) of claim 11, wherein each of the plurality of bus bars (210) includes:
a front bus bar wing (216) coupled to a preceding battery cell of the two adjacent battery cells (100);
a rear bus bar wing (217) coupled to a subsequent battery cell of the two adjacent battery cells (100); and
a bus bar body (211) extending rearward from the front bus bar wing (216) and leading to the rear bus bar wing (217).

13. The battery pack (10) of claim 12, wherein a bus bar wing includes at least one of the front bus bar wing (216) or the rear bus bar wing (217),
wherein each bus bar (210) includes a cell coupling hole (218) that is formed in the bus bar wing and is elongated in the front-rear direction, and
wherein the electrode lead (120) is inserted into the cell coupling hole (218).

14. The battery pack (10) of any one of claims 10 to 13, wherein the electrode lead (120) includes a first electrode lead (121) and a second electrode lead (122),
wherein the bus bar assembly (200) further includes a support frame (220) including a frame body (221), and
wherein the frame body (221) crosses between the first electrode lead (121) and the second electrode lead (122) and is elongated in the front-rear direction.

15. The battery pack (10) of claim 14, wherein the support frame (220) further includes:
a plurality of frame wings (225) extending from the frame body (221); and
a plurality of frame ribs (226) respectively protruding from the plurality of frame wings (225),
wherein each of the plurality of frame wings (225) is positioned between a corresponding bus bar of the plurality of bus bars (210) and the plurality of battery cells (100), and
wherein each of the plurality of frame ribs (226) is coupled to the bus bar body (211) of the corresponding bus bar.
